# EUROPEAN PATENT APPLICATION

(11) **EP 4 440 240 A1**
(43) Date of publication of application: **02.10.2024**
(21) Application number: 24165508.3
(22) Date of filing: 22.03.2024
(51) Int. Cl.: H04W 88/06, H04W 24/10, H04W 60/00, H04W 76/15, H04W 76/27

(54) **METHOD AND UE FOR REPORTING IDLE MEASUREMENT REPORT FOR SECONDARY CELL ADDITION**

(30) Priority: 24.03.2023 IN 202341021247; 22.01.2024 IN 202341021247
(71) Applicant: Samsung Electronics Co., Ltd., Suwon-si, Gyeonggi-do 16677 (KR)
(72) Inventor: MUTHARASAN, N, Bengaluru (IN); GOEL, Meha, Bengaluru (IN); MADHURANTAKAM, Shrinath Ramamoorthy, Bengaluru (IN)
(74) Representative: Marks & Clerk LLP

(57) **Abstract**

A method and UE for reporting idle measurement reports for secondary cell addition in a Multi Subscriber Identity Module, SIM, Multi Standby, MUSIM, mode are provided. The method includes: receiving, by a MUSIM user equipment, UE, during a connection release from a network, an idle measurement configuration indicating a first set of frequencies compatible with a first serving frequency of a Long-Term Evolution, LTE, stack, wherein a primary stack of a first SIM of the MUSIM UE is registered with the network with the first serving frequency, and a secondary stack of a second SIM of the MUSIM UE is registered with the network with a second serving frequency among the first set of frequencies; performing, by the UE, an idle measurement with each frequency of the first set of frequencies; receiving, by the UE, a request to provide an idle measurement report from the network when the primary stack moves to a connected mode; performing, by the primary stack, a filtering operation on the first set of frequencies with the first serving frequency and with the second serving frequency based on carrier aggregation, CA, compatibility; and sending, by the UE, the idle measurement report indicating frequencies among the first set of frequencies that are compatible with both the first serving frequency and the second serving frequency based on the filtering operation.

## Description

### FIELD

The present disclosure relates to a method and system to improve idle measurement reporting for reliable secondary cell addition.

### BACKGROUND

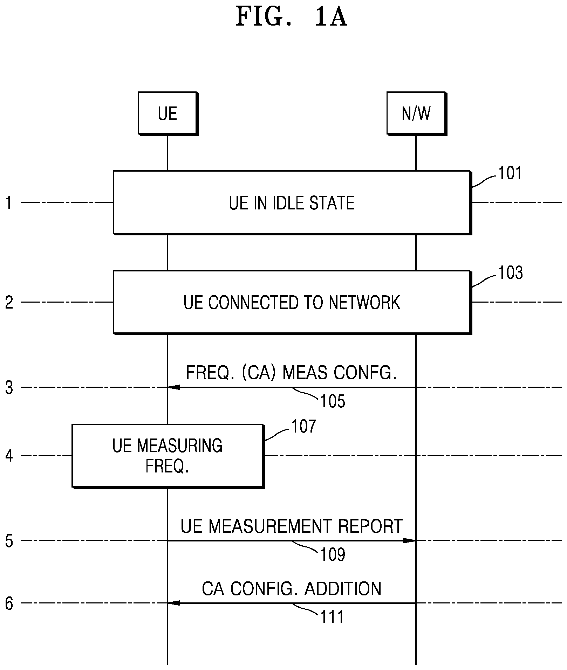

In Long-Term Evolution (LTE) and New Radio (NR), Carrier Aggregation (CA) allows mobile operators and devices to combine two or more LTE/NR carrier frequencies to achieve higher data rates. In particular, the carrier aggregation (CA) is a feature that allows mobile operators and devices to combine two or more carrier frequencies to achieve higher data rates. To achieve this, a network adds secondary cells, in addition to a registered primary cell, based on a measurement report from a User Equipment (UE). In a related CA, the network will configure measurements for neighbor frequencies when the UE is in a connected mode. Based on the measurement reports received from the UE, the network adds the secondary cells in the UE. FIG. 1A illustrates a legacy CA as per the state of the art. Referring to the FIG. 1A initially at operation 101 the UE is in an idle state. Thereafter at operation 103, the UE moves to a connected state to connect with the network (N/W or NW). Thereafter, at operation 105, the frequency measurement configuration signal is received by the UE from the network for CA. After that at operation 107, the UE measures signal quality and/or signal strength for various carrier frequencies and thereafter, at operation 109, the UE sends the measurement report to the network. Based on the measurement report received from the UE, the network adds the secondary cells in the UE and sends the CA configuration addition at the operation 111. Thus, in the legacy CA, the network will configure measurements for neighbor frequencies when the UE is in the connected mode.

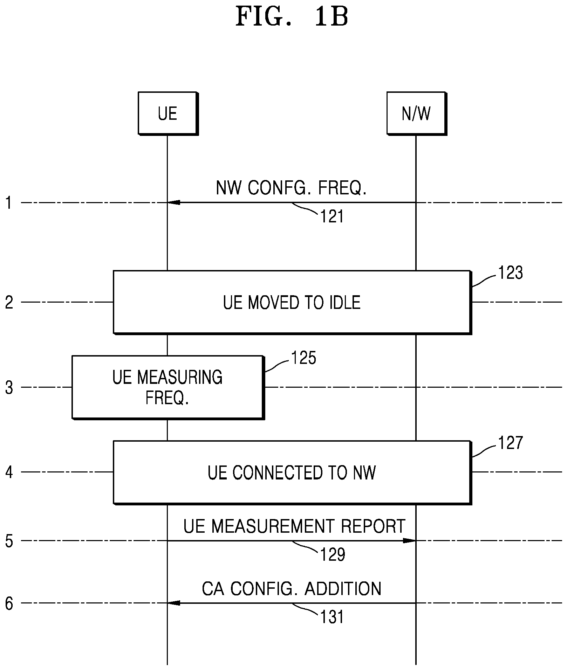

In the 3rd Generation Partnership Project (3GPP) Release 15, a new feature namely Enhanced Utilization of LTE CA (euCA) is introduced with which a connected mode UE is configured by the Network (N/W) with neighbor frequencies which are to be measured after the UE moves to an idle mode for faster secondary cell addition when the UE enters the connected mode subsequently. FIG. 1B illustrates an enhanced CA (euCA). Referring to the FIG. 1B initially at operation 121, the UE receives the network configuration frequency. Thereafter, at operation 123 the UE moves to an idle state. Then at operation 125, the UE measures signal quality and/or signal strength of various carrier frequencies. The UE then at operation 127 moves to a connected mode with the network. Subsequently, at the operation 129, the UE sends the measurement report (including signal strength/signal quality measurements) to the network. Based on the measurement report received from the UE, the network adds the secondary cells in the UE and sends the CA configuration addition at the operation 131. Thus, it can be seen the connected mode UE is configured by the Network (N/W) with the neighbor frequencies which are to be measured after the UE moves to the idle mode for faster secondary cell addition when the UE enters a connected mode subsequently.

However, there is a need to increase the reliability of idle mode measurements reported to a network which in turn will increase the throughput of secondary cells added.

### SUMMARY

One or more example embodiments address one or more of the above-discussed technical problems.

According to an aspect of an example embodiment, a method for reporting idle measurement report for secondary cell addition is provided. The method includes: receiving, by a user equipment (UE) during a connection release from a network, an idle measurement configuration indicating a set of neighboring frequencies distinct from a serving frequency on which the UE is registered with the network for a serving cell, wherein enhanced utilization of carrier aggregation (euCA) feature for carrier aggregation (CA) compatibility is enabled in the UE; performing, by the UE, an idle measurement with each frequency of the set of neighboring frequencies; reselecting, by the UE, a new serving frequency that is compatible with some of the set of neighboring frequencies for a new serving cell; receiving, by the UE, a request to provide an idle measurement report from the network when the UE moves to a connected mode with the new serving cell on the new serving frequency; performing, by the UE based on a CA compatibility, a filtering operation on the set of neighboring frequencies to identify frequencies that are compatible with the new serving frequency; and sending, by the UE, the idle measurement report indicating the frequencies that are compatible with the new serving frequency based on the filtering operation.

According to an aspect of an example embodiment, a method for reporting idle measurement reports for secondary cell addition in a Multi Subscriber Identity Module (SIM) Multi Standby (MUSIM) mode is provided. The method includes: receiving, by a MUSIM user equipment (UE) during a connection release from a network, an idle measurement configuration indicating a first set of frequencies compatible with a first serving frequency of a Long-Term Evolution (LTE) stack, wherein a primary stack of a first SIM of the MUSIM UE is registered with the network with the first serving frequency, and a secondary stack of a second SIM of the MUSIM UE is registered with the network with a second serving frequency among the first set of frequencies; performing, by the UE, an idle measurement with each frequency of the first set of frequencies; receiving, by the UE, a request to provide an idle measurement report from the network when the primary stack moves to a connected mode; performing, by the primary stack, a filtering operation on the first set of frequencies with the first serving frequency and with the second serving frequency based on carrier aggregation (CA) compatibility; and sending, by the UE, the idle measurement report indicating frequencies among the first set of frequencies that are compatible with both the first serving frequency and the second serving frequency based on the filtering operation.

According to an aspect of an example embodiment, a user equipment (UE) for reporting an idle measurement report for secondary cell addition is provided. The UE includes: one or more memories storing instructions; and one or more processors configured to execute the instructions to: receive during a connection release from a network, an idle measurement configuration indicating a set of neighboring frequencies distinct from a serving frequency on which the UE is registered with the network for a serving cell, wherein enhanced utilization of carrier aggregation (euCA) feature for carrier aggregation (CA) compatibility is enabled in the UE; perform an idle measurement with each frequency of the set of neighboring frequencies; reselect a new serving frequency that is compatible with some of the set of neighboring frequencies for a new serving cell; receive a request to provide the idle measurement report from the network when the UE moves to a connected mode with the new serving cell; perform, based on a CA compatibility, a filtering operation on the set of neighboring frequencies to identify frequencies that are compatible with the new serving frequency; and send the idle measurement report indicating the frequencies that are compatible with the new serving frequency based on the filtering operation.

According to an aspect of an example embodiment, a user equipment (UE) for reporting idle measurement reports for secondary cell addition in a Multi Subscriber Identify Module (SIM) Multi Standby (MUSIM) mode is provided. The UE includes: one or more memories storing instructions; and one or more processors configured to execute the instructions to: receive, during a connection release from a network, an idle measurement configuration indicating a first set of frequencies compatible with a first serving frequency of a Long-Term Evolution (LTE) stack, wherein a primary stack of a first SIM of the UE is registered with the network with the first serving frequency and a secondary stack of a second SIM of the UE is registered with the network with a second serving frequency among the first set of frequencies; perform an idle measurement with each frequency of the first set of frequencies; receive a request to provide an idle measurement report from the network when the primary stack moves to a connected mode; perform, by the primary stack, a filtering operation on the first set of frequencies with the first serving frequency and with the second serving frequency based on carrier aggregation (CA) compatibility; and send the idle measurement report indicating frequencies among the first set of frequencies that are compatible with both the first serving frequency and the second serving frequency based on the filtering operation.

At least some of the above and other features of the invention are set out in the claims.

### BRIEF DESCRIPTION OF THE DRAWINGS

The above and other aspects will be more apparent from the following description of example embodiments, taken in conjunction with the accompanying drawings, in which:
FIGS. 1A and 1B illustrate a CA and an enhanced CA.
FIG. 2 illustrates an example scenario of faulty reporting on an incompatible frequency.
FIG. 3 illustrates a sequence of operations for the example scenario of FIG. 2.
FIG. 4A illustrates a sequence of operations for performing a CA compatibility check when sending reports to network, according to an example embodiment.
FIG. 4B illustrates a flow chart corresponding to the sequence of operations of the FIG. 4A, according to an example embodiment.
FIG. 5 illustrates an example scenario of faulty reporting on incompatible frequency in a Multi SIM Multi Standby (MUSIM).
FIG. 6 illustrates a sequence of operations for the example scenario of FIG. 5.
FIG. 7A illustrates a flow chart corresponding to the sequence of operations, according to an example embodiment.
FIG. 7B illustrates a sequence of operations for performing CA compatibility check with peer stack frequency when sending reports to network, according to an example embodiment.
FIG. 8 illustrates a sequence of operations for reporting older measurement reports when a UE remains in idle mode for a longer time.
FIG. 9 illustrates a sequence of operations for fetching latest measurement report from the peer stack, according to an example embodiment.
FIG. 10 illustrates a flow chart for fetching the latest measurement report from the peer stack, according to an example embodiment.
FIG. 11 illustrates a sequence flow for sending the measurement report even after the expiry of the SI validity timer.
FIG. 12 illustrates a sequence of operations for discarding the idle measurement reports after the SI validity timer expiry, according to an example embodiment.
FIG. 13 illustrates a diagram of a network, according to an example embodiment.
FIG. 14 is a diagram of a user equipment (UE) in a wireless communication system, according to an example embodiment.

### DETAILED DESCRIPTION

Hereinafter, example embodiments are described with reference to the accompanying drawings, in which like reference numerals are used to depict the same or similar elements, features, and structures. Embodiments described herein are example embodiments, and thus, the present disclosure is not limited thereto, and may be realized in various other forms. Each example embodiment provided in the following description is not excluded from being associated with one or more features of another example or another example embodiment also provided herein or not provided herein but consistent with the present disclosure.

As used herein, the terms "1st" or "first" and "2nd" or "second" may use corresponding components regardless of importance or order and are used to distinguish a component from another component without limiting the components. It will be also understood that, although in example embodiments related to methods or flowcharts, a step or operation is described later than another step or operation, the step or operation may be performed earlier than the other step or operation unless the other step or operation is described as being performed before the step or operation.

Expressions such as "at least one of" when preceding a list of elements, modify the entire list of elements and do not modify the individual elements of the list. For example, the expression, "at least one of a, b, and c," should be understood as including only a, only b, only c, both a and b, both a and c, both b and c, or all of a, b, and c.

It should be understood at the outset that although illustrative implementations of the embodiments of the present disclosure are illustrated below, the present invention may be implemented using any number of techniques, whether currently known or in existence. The present disclosure should in no way be limited to the illustrative implementations, drawings, and techniques illustrated below, including the example design and implementation illustrated and described herein, but may be modified within the scope of the appended claims along with their full scope of equivalents.

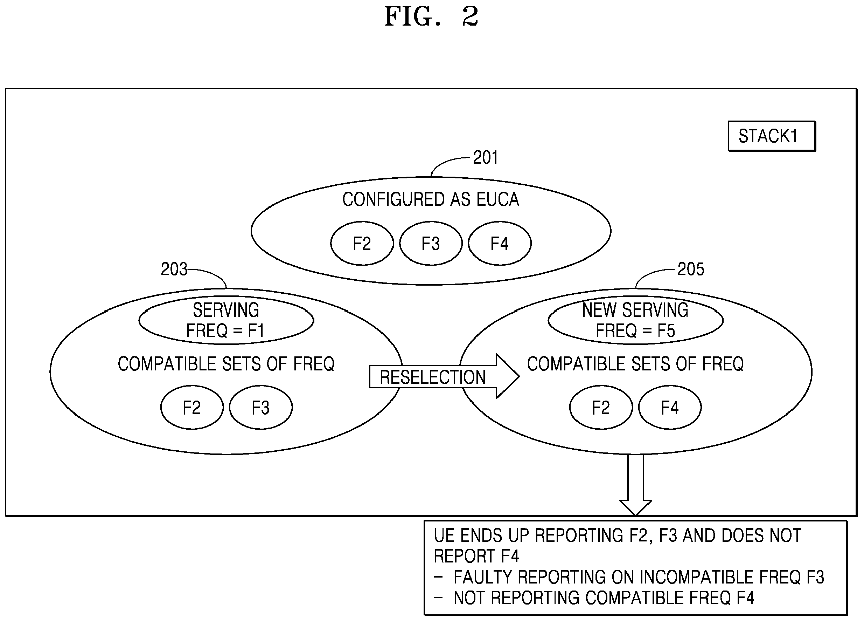

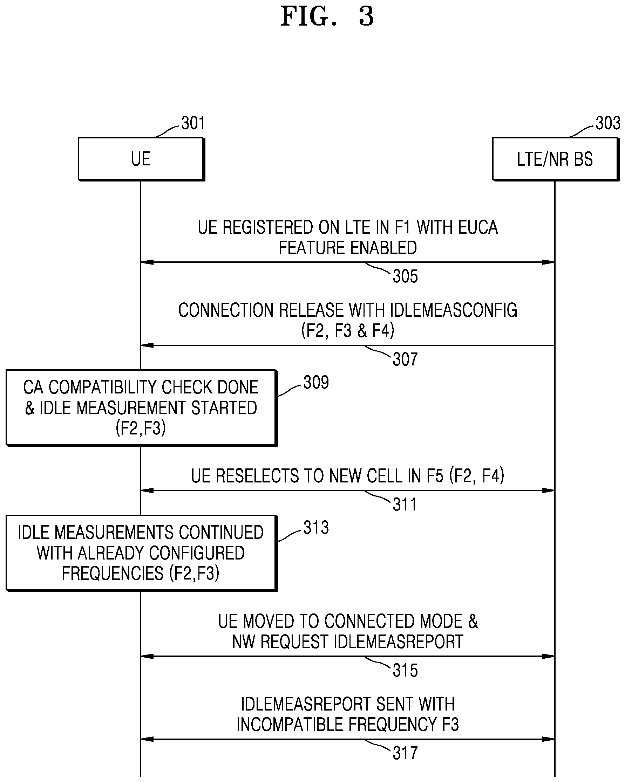

FIG. 2 illustrates an example scenario of faulty reporting on incompatible frequency. FIG. 3 illustrates a sequence of operations for example FIG. 2. The problem scenario will be explained by referring to FIGS. 2 and 3.

As shown in FIG. 2, a first stack Stack1, which includes serving cells 201, 203 and 205 is provided. Initially, UE 301 is registered in LTE/NR cell 203 with euCA feature enabled from SystemInformationBlockType2 (SIB2) as shown in the operation 305. The SystemInformationBlockType2 (SIB2) is a broadcast information which includes radio resource configuration information that is common for all UEs. It further includes access barring information, radio resource configuration of common and shared channels, timers and constants which are used by UEs. In this case, idleModeMeasurements-r15 is received in SIB2 for enabling idle measurement reporting feature in UE. idleModeMeasurements-r15 may be a command for instructing the UE to enable idle measurement reporting. idleModeMeasurements-r15 is defined in 3GPP specification 36.331 6.3.1. As discussed herein, the term "idle measurement" may be refer to an "idle/inactive measurement" or an "inactive measurement" as defined in 3GPP TS 36.331 version 16.5.0 Release 16. For instance, an idle measurement may determine a signal quality (e.g. cell quality) and/or beam quality. Performing an idle measurement for a particular frequency may determine a signal quality or signal strength based on a signal detected at that particular frequency (e.g. at a particular carrier frequency). Idle measurements for a particular frequency may be averaged over a particular time period.

Now, during connection release at operation 307, idle measurement configuration is received with a list of carrier frequencies to measure. In the example scenario, the UE 301 has received the list of carrier frequencies with frequencies F2, F3, and F4. Now, CA combination validity is checked between a serving frequency and a configured frequency. Thus, measurements will be performed accordingly. Now according to the example scenario, at operation 309, for the serving frequency F1, the compatible set of frequencies was obtained as F2 and F3. Accordingly, idle measurement started for F2 and F3, at operation 309.

Now during, the occurrence of any condition, for example during reselection, the UE 301 may have a new serving cell with a new serving frequency. In the example scenario, the UE 301 may have a new serving cell 205 with a new serving frequency F5. Now, if the UE 301 reselects to a new inter-frequency cell within the validity area, here the new inter-frequency cell is cell 205, then CA combination compatibility might differ between the newly camped serving frequency and configured frequency. In the example scenario, the newly camped serving frequency is F5 and the set of compatible frequencies after CA compatibility check is obtained as F2 and F4. Now according to the example scenario, at operation 311, the UE 301 reselects to a new cell in F5 with a compatible set of frequencies as F2 and F4. Thereafter, at operation 313, the idle measurement continued with the already configured frequencies i.e., in this case F2 and F3. Now when the UE 301 moves to a connected mode and the network 303 request for the idle measurement report as shown in the operation 315, then UE 301 will be reporting incompatible frequencies for current serving frequency to the network 303 as shown in the operation 317.

According to this example scenario, the UE 301 ends up reporting measurement reports of F2 and F3 and does not report a measurement report for F4. Thus, the following problems may arise:
- there is a faulty reporting of incompatible frequency F3,
- measurement reports of the compatible frequency F4 have not been reported,
- also, only the three best frequencies must be reported to the network even though the network configures eight frequencies to measure in idle mode. So, the UE 301 might ignore valid compatible frequency and reports CA incompatible frequency to the network 303.

The aforementioned problem may be overcome by implementing the following methodology:
- Performing idle mode measurements for all the frequencies configured by the network instead of filtering based on serving frequency compatibility.
- Filtering based on compatibility during transmission of reports to network.
   - filter frequencies based on CA combination compatibility.

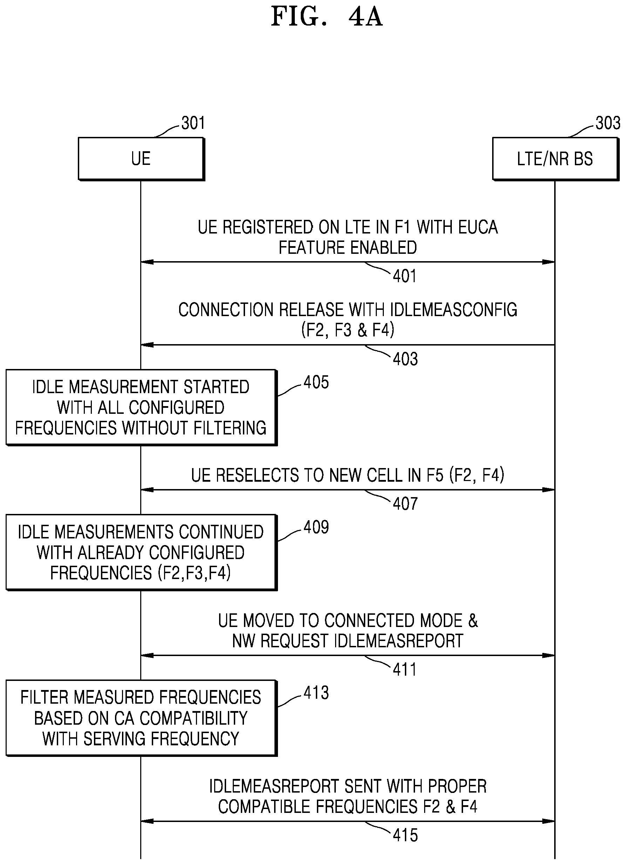

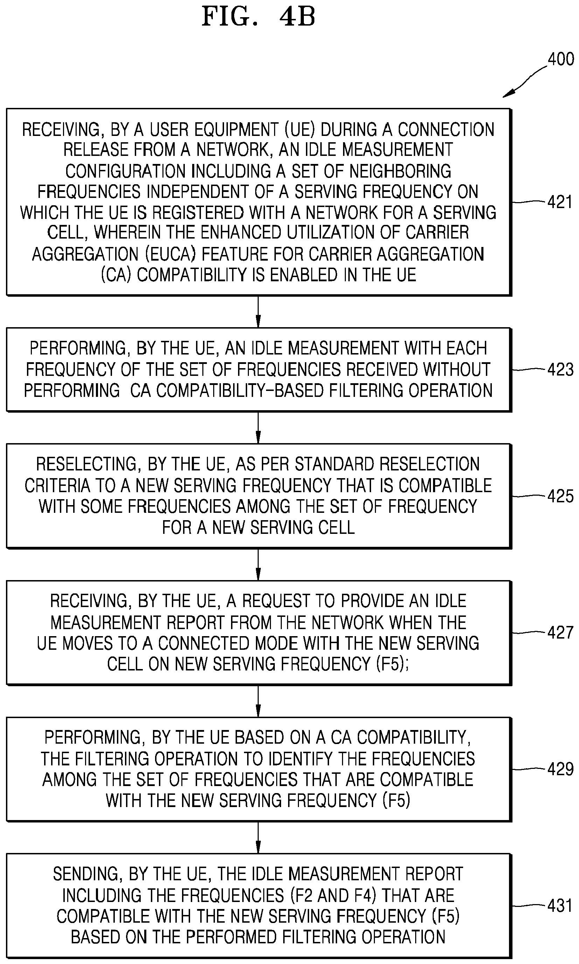

FIG. 4A illustrates a sequence of operations for performing CA compatibility checks when sending reports to the network, according to an example embodiment. FIG. 4A will be explained by referring to FIGS. 2 and 3. Further, FIG. 4B illustrates a flow chart corresponding to the sequence of operations of FIG. 4A, according to an example embodiment. Further, the same or similar reference numerals are used for the ease of explanation. According to an example embodiment, an explanation will be made based on the example scenario as described in FIG. 2. Further, a detailed explanation of similar operations is omitted for the sake of brevity.

According to an example embodiment and referring to FIG. 4A, at operation 401, the enhanced utilization of carrier aggregation (euCA) feature for carrier aggregation (CA) compatibility is enabled in the UE 301 and UE 301 is registered on the LTE base station (BS) 303.

Further, referring to the FIG. 4B, at operation 421, the UE 301 receives an idle measurement configuration including a set of neighboring frequencies i.e., F2, F3, F4 independent of a serving frequency F1 on which the UE 301 is registered with the network 303 for a serving cell 203 during a connection release from the network 303. Further, the serving cell 201 depicts a superset frequency (F2, F3, F4) sent by the network to current serving cell. Thereafter, the operation 403 which corresponds to the operation 307 is performed. Thus, connection is released by the network with the set of neighboring frequencies i.e., F2, F3, F4. Now at operation 423 which is corresponding the operation 405, the UE 301 performs an idle measurement with each frequency of the set of frequencies received without performing CA compatibility based filtering operation. That is to say the UE 301 performs idle measurement for all configured frequencies and does not perform a filtering operation. According to an example embodiment, when a network configures frequencies to perform idle mode measurements, it does not restrict frequencies to measure based on CA combination validity. For example, the UE 301 may perform idle measurement for one or more incompatible frequencies (e.g. one or more frequencies that are incompatible with the serving frequency and/or serving cell). Thereafter, during the occurrence of reselection as explained above, reselection to new serving frequency is performed. Accordingly, at operation 425 which corresponds to the operation 407 and operation 311, the UE 301 performs reselection as per standard reselection criteria to a new serving frequency F5. The new frequency F5 is compatible with some frequencies among the set of frequencies for the new serving cell 205. According to an example scenario, the new frequency F5 is compatible with F2, F4 and not compatible with F3. The UE 301 continues performing the idle measurement with each of the set of frequencies (F2, F3, and F4) at operation 409. At the operation 427, when the UE 301 moves to a connected mode with the new serving cell 205 on a new serving frequency (F5), the UE 301 receives a request to provide an idle measurement report from the network 303. The operation 427 is similar to operations 315 and 411. Thereafter, at operation 429 corresponding to operation 413, the UE 301 performs the filtering operation to identify the frequencies among the set of frequencies i.e., F2 and F4 that are compatible with the new serving frequency F5. Thereby at operation 431 corresponding to operation 415, the UE 301 sends the idle measurement report including the frequencies F2 and F4 that are compatible with the new serving frequency F5 based on the performed filtering operation.

According to an example embodiment, after idle mode measurement duration, when the UE reports measurement results to the network, the measured frequencies may be filtered based on CA compatibility with the latest serving frequency. That is to say, according to example embodiments, the CA compatibility filtering operation is performed during reporting to the network based on the request, when the UE moves to a connected mode with the new serving cell, and not during the performance of idle measurement while in idle mode. In an implementation, the request is received from the network. This avoids the addition of a secondary cell from network with a frequency that is incompatible with current serving frequency even if the UE reselects to an inter frequency cell. The inter frequency cell refers to the cells belonging to different frequencies (e.g. having different compatible frequencies to the current serving frequency). This helps in reliable measurement reporting and no degradation in data throughput. According to an example embodiment, the operations 405 and 413 help to avoid faulty reporting of the incompatible frequency and further report the compatible frequency for the last serving frequency.

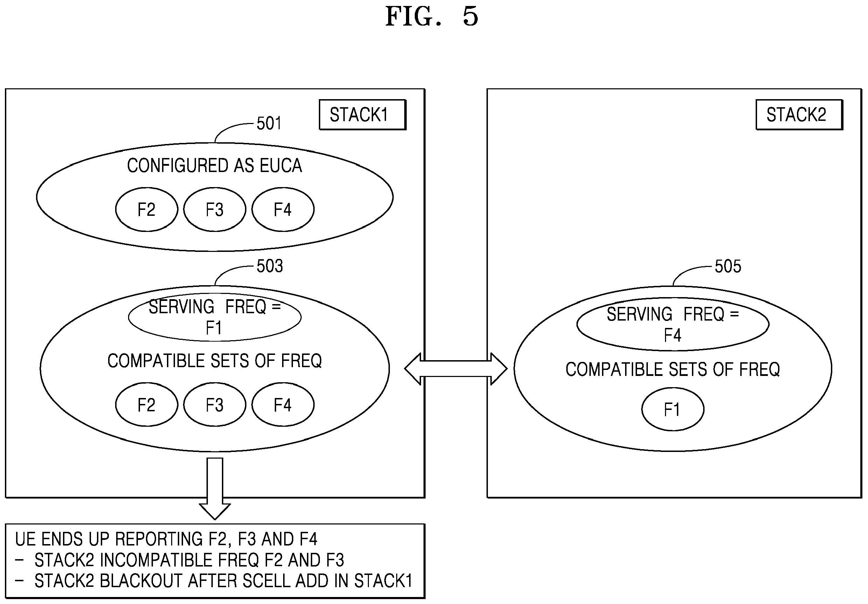

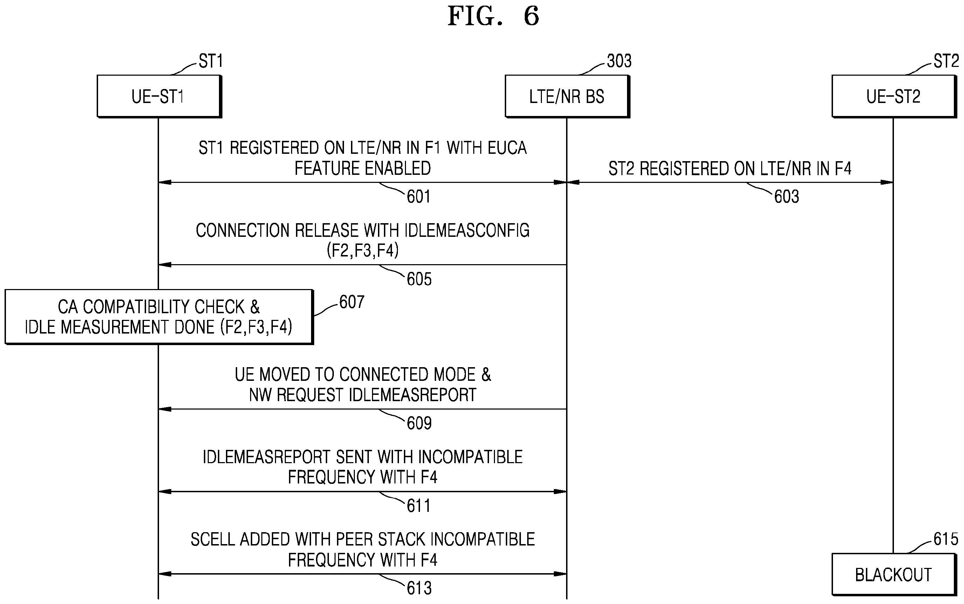

FIG. 5 illustrates an example scenario of faulty reporting on incompatible frequency in a Multi SIM Multi Standby (MUSIM). FIG. 6 illustrates a sequence of operations for the example scenario shown in FIG. 5. The problem scenario will be explained by referring to the FIGS. 5 and 6.

In the MUSIM the UE 301 may have more than one Subscriber Identity Modules (SIM), i.e., may have multiple SIMs, and the multiple SIMs may camp on the same or different bands. Accordingly, the UE camps on the same frequency or different frequencies. For example, one SIM may camp on a first stack and another SIM may camp on a second stack. The UE may register with the network with different serving frequencies for each of its respective stacks. In an example, as shown in the FIG. 5, a UE may have a dual SIM. According to this example scenario, at operations 601 and 603 a first stack Stack1 (ST1) of UE 301 and a second stack Stack2 (ST2) of the UE 301 is register in F1 and F4 on LTE/NR i.e., network 303. Further, the UE is enabled with euCA feature. At operation 605, the network performs connection release to send idle measurement configuration including a set of neighboring frequencies F2, F3 and F4 that are compatible with the serving frequency F1.

Only CA combination validity will be checked between serving frequency and configured frequencies in the current LTE stack. If it is compatible, then measurements will be performed for configured frequency and reported to the network. Now in MUSIM (Multi SIM Multi Standby) scenario (i.e., LTE+LTE/NR+NR), Stack2 might be camped on a different frequency and this frequency might not be compatible with the idle mode measured frequencies reported to network. So when secondary cells are added in Stack1 with incompatible frequencies to Stack2, then there is a high possibility of blackout in peer stack. In particular, the blackout refers to a condition where the radio frequency (RF) (e.g. the serving frequency and/or other compatible frequencies) is unavailable to a specific stack in the UE. This can lead to unexpected failures in Stack2. The aforesaid issues are shown in the further operations. Referring to FIG. 5, Stack2 (ST2) may be alternatively referred as a peer stack or primary stack and Stack1 (ST1) may be alternatively referred as a secondary stack throughout the disclosure without deviating from the scope of the disclosure.

Accordingly at operation 607, the UE 301 performs CA compatibility check and idle measurement on F2, F3, and F4. Thereafter, at operation 609 when UE 301 moves to the connected mode, the network requests for idle measurement report. In connected mode, the UE 301 may be camped on Stack2 having a compatible frequency set as F1. At operation 611, an idle measurement report was sent with frequencies F2, F3 and F4 where F2 and F3 are incompatible frequencies to Stack2 serving frequency F4. Thus, if a secondary cell (SCell) is added with an incompatible frequency to Stack2 in operation 613, then Stack2 gets blackout as in operation 615 after SCell added in ST1.

The aforementioned problem has been overcome by implementing following methodology:
- Perform idle mode measurements for all the frequencies configured by network instead of filtering based on serving frequency compatibility,
- Filtering based on compatibility during transmission of reports to network
   - filter frequencies based on CA combination compatibility,
   - also considering peer stack serving frequency compatibility.

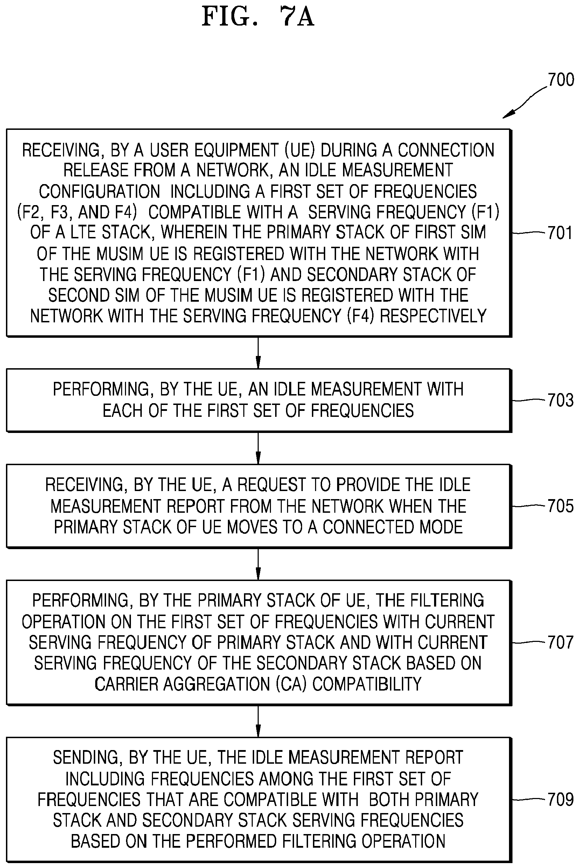

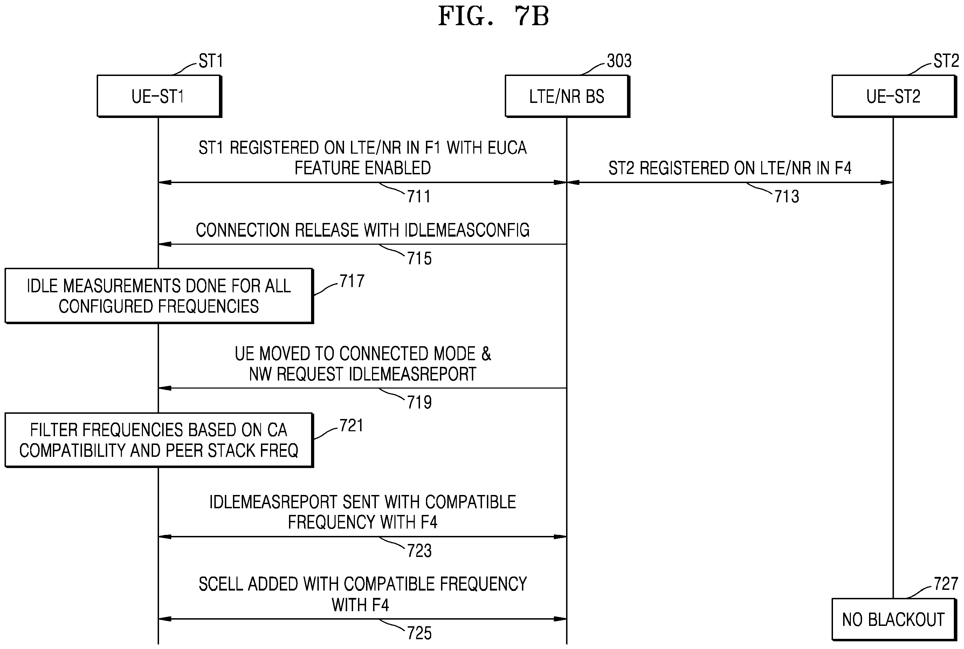

FIG. 7B illustrates a sequence of operations for performing CA compatibility check when sending reports to network with a peer stack, according to an example embodiment. The FIG. 7B will be explained by referring to the FIGS. 5 and 6. Further, FIG. 7A illustrates a flow chart corresponding to the sequence of operations of the FIG. 7B, according to an example embodiment. Further, the same or similar reference numerals are used for the ease of explanation. Explanation will be made based on the example scenario as described in FIG. 5. Further, a detailed explanation of similar operations is being omitted here for the sake of brevity.

According to an example embodiment and referring to FIGS. 5 and 6, as shown in the operations 711 and 713, a primary stack of the MUSIM UE is registered with the network with the serving frequency F1 and a secondary stack of the MUSIM UE is registered with the network with the serving frequency F4 respectively. Here the primary and the secondary stack corresponds to ST1 and ST2 respectively and hence may be alternatively used throughout the disclosure without deviating from the scope of the disclosure. Further, the first SIM and the second SIM may be alternatively referred as SIM1 and SIM 2 respectively without deviating from the scope of the disclosure.

At operation 701, the UE 301 receives an idle measurement configuration including a first set of frequencies (F2, F3, and F4) compatible with a serving frequency (F1) of a LTE stack during the connection release from the network. The operation 701 corresponds to operations 715, 605.

At operation 703, the UE 301 performs an idle measurement with each of the first set of frequencies i.e., F2, F3, and F4. That is to say the UE 301 performs the idle measurement for all the configured frequencies. The operation 703 corresponds to operations 717, 607.

At operation 705, when the primary stack ST1 of UE 301 moves to connected mode, the UE 301 receives a request to provide the idle measurement report from the network. As per the example scenario of FIG. 5, the UE 301 is now camped on secondary stack ST2 in serving frequency F4 with compatible frequency as F1. The operation 705 corresponds to operations 719, 609.

Thereafter, at operation 707, the UE performs the filtering operation on the first set of frequencies i.e., F2, F3, and F4 with current serving frequency F1 of primary stack and with current serving frequency F4 of the secondary stack based on carrier aggregation (CA) compatibility. The operation 707 corresponds to operation 721. According to an example embodiment, the CA compatibility is checked with the current frequencies with respect to both the stacks. Accordingly, the UE 301, filters frequencies based on CA compatibility with peer stack frequency also. Thus, due to operation 707, the UE 301, at operation 709 and 723, an idle measurement report is sent with compatible frequency with F4. In particular, the idle measurement report including frequencies among the first set of frequencies that are compatible with both primary stack and secondary stack serving frequencies is sent based on the performed filtering operation. Thereafter, at operation 725 SCell was added with the compatible frequency with F4. This helps in reliable measurement reporting to network and no blackouts 727 in peer stack.

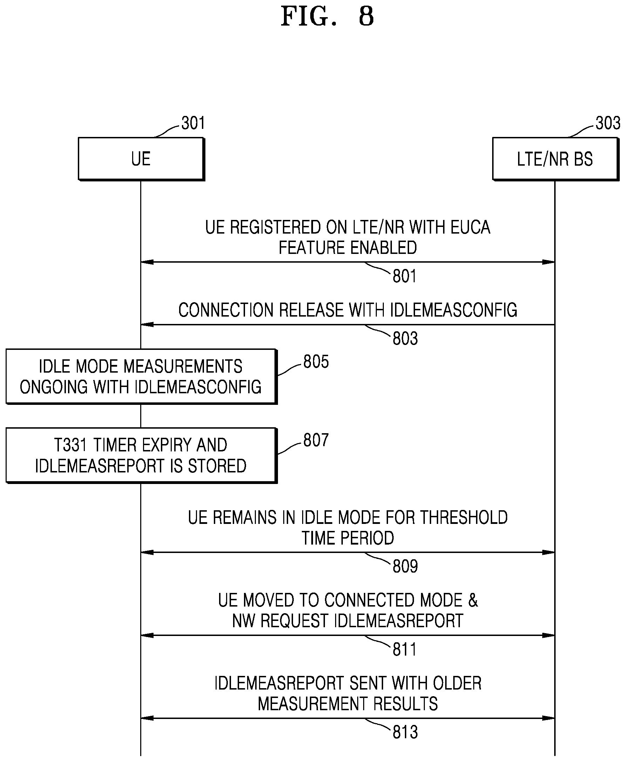

Now in the Multi-SIM case, initially, both stacks with the same operator SIM cards are registered in LTE/NR cell with euCA feature enabled from SIB2. In ST1, during connection release, the idle measurement configuration is received with a list of carrier frequencies to measure, and the UE 301 performs measurements until idle measurement timer expiry. For example, the timer may be a T331 timer. A T331 timer is a timer defined in 5G NR radio resource control (RRC) (e.g. as defined in 3GPP specification 36.331 7.3.1). The T331 timer may be is started upon receiving an RRCRelease message with measIdleDuration (e.g. upon entering an idle mode, where a duration for performing idle measurements is defined by measIdleDuration). The timer may expire once it reaches the duration defined by measIdleDuration. But in ST1, the UE might remain in idle mode for a longer time (e.g. a time longer than the duration defined by measIdleDuration) which will lead to the UE reporting old idle measurement reports to the network because reports are sent to the network only when UE moves to connected mode. So, the network might add secondary cells with poor signal strength which degrades the data throughput. FIG. 8 illustrates a sequence of operations for reporting older measurement reports when a UE remains in idle mode for a longer time.

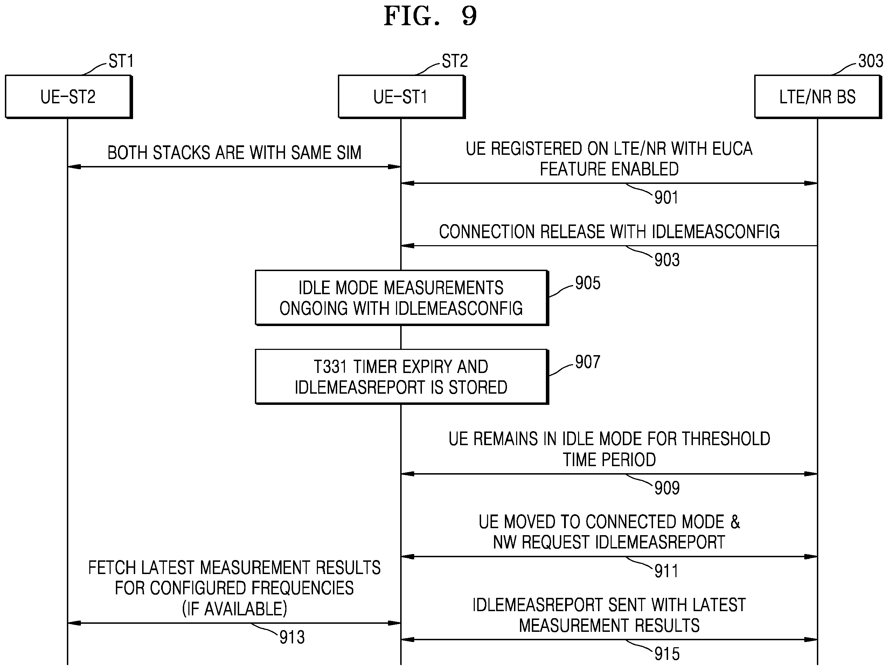

Operations 801, 803, and 805 are similar to operations 601, 605, and 607 and are explained above. At operation 807, after the expiry of the idle measurement timer, the idle measurement reports are stored. Now if the UE remains in the idle mode for more than a threshold time period as shown in the operation 809, and when the UE moved to a connected mode, the network requests the idle measurement report as shown in the operation 811. As an example, the threshold time period may be 24hrs of time duration. In this scenario, at operation 813, UE 301 sends an idle measurement report with older measurement results. To overcome the aforesaid issue following method as shown in the FIG. 9 has been implemented.

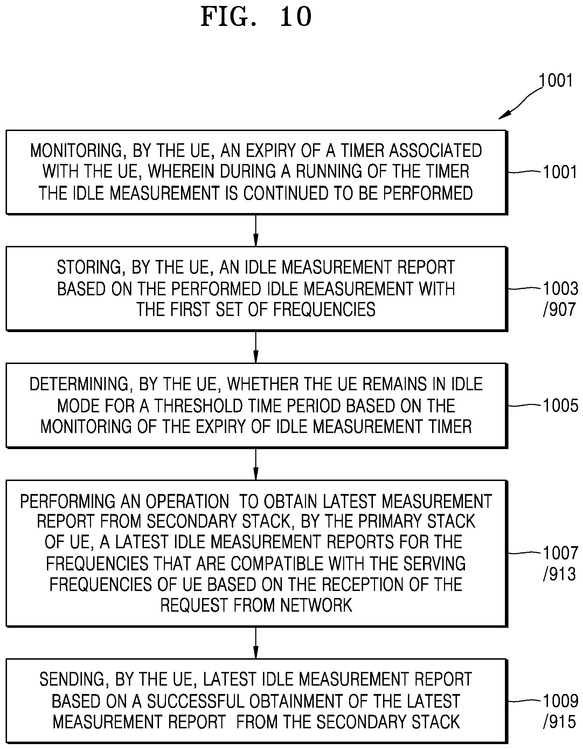

FIG. 9 illustrates a sequence of operations for fetching the latest measurement report from the peer stack, according to an example embodiment. According to example embodiments, the ST1 fetches the latest measurement results for the configured frequencies from ST2 (if available) when the network requests for idle measurement reports after moving to connected mode. This helps in reliable measurement reporting to the network and no degradation in data throughput. FIG. 10 illustrates a flow chart for fetching the latest measurement report from the peer stack, according to an example embodiment. FIG. 10 will be explained by referring to FIGS. 7A, 7B, 8 and 9 for ease of explanation.

According to an example embodiment, it was considered that the ST1 and ST2 are with same SIM. Thus, the ST1 and ST2 holds SIM for same network operator. Further, operations 901, 903 and 905 correspond to operation 711, 715 and 717 of FIGS. 7A and 7B therefore for the sake of brevity it is omitted here.

Now referring to FIG. 10, at operation 1001, the UE monitors an expiry of idle measurement timer associated with the UE 301, where during the running of the timer the idle measurement is continued to be performed until the expiry of the timer. Thereafter, at operation 1003 the UE 301 stores the idle measurement report based on the performed idle measurement with the first set of frequencies until the expiry of the timer. Further, at operation 1005, the UE 301 determines whether the UE 301 remains in idle mode for the predefined threshold time period based on the monitoring of the expiry of an idle measurement timer. In particular, the UE 301 determines whether the UE 301 remains in idle mode even after the expiry of the idle measurement timer. The idle measurement timer counts the timing of the UE remaining in the idle mode for the predefined threshold time period. Operation 1005 corresponds to operation 909 and operation 1003 corresponds to operation 907. Now when the UE 301 moves to connected mode, the network requests for an idle measurement report to the UE 301 at operation 911. The operation 911 corresponds to operation 719. Then at operation 1007, the primary stack ST1 of UE 301 performs an operation to obtain the latest measurement values from secondary stack ST2 based on the reception of the request from the network. The latest idle measurement values are fetched for the frequencies that are compatible with the serving frequency of UE 301. The operation 1007 corresponds to operation 913. In particular, the ST1 fetches the latest measurement values for configured frequencies if available. Alternatively, if the latest measurement values are not available then the UE will report measurement reports as stored in the ST1. Accordingly, at operation 1009, the UE 301 sends a latest measurement report if the latest measurement values were obtained successfully from the secondary stack ST2. In particular, ST1 fetches measurement values from ST2 and composes in the network comprehensible format and sends a measurement report. The operation 1009 corresponds to operation 915. This helps in reliable measurement reporting to the network and no degradation in data throughput.

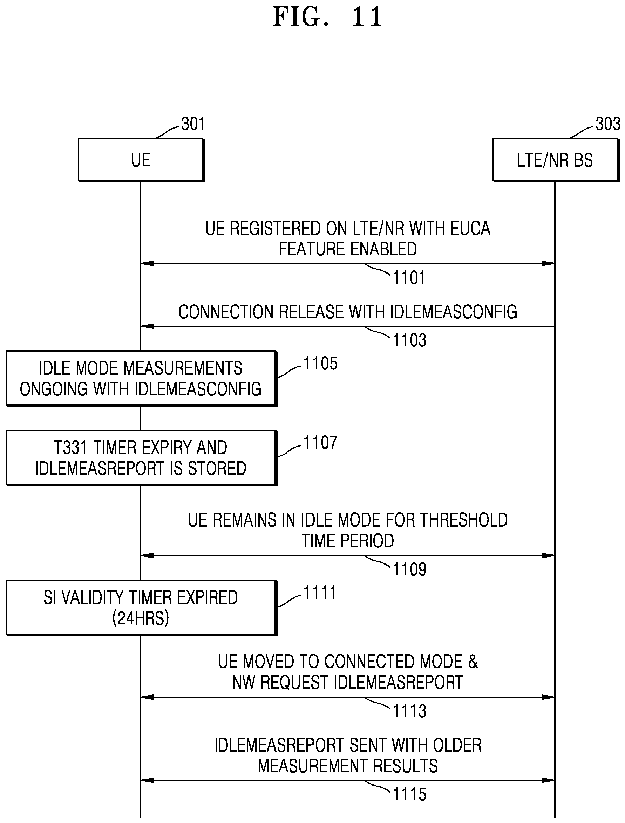

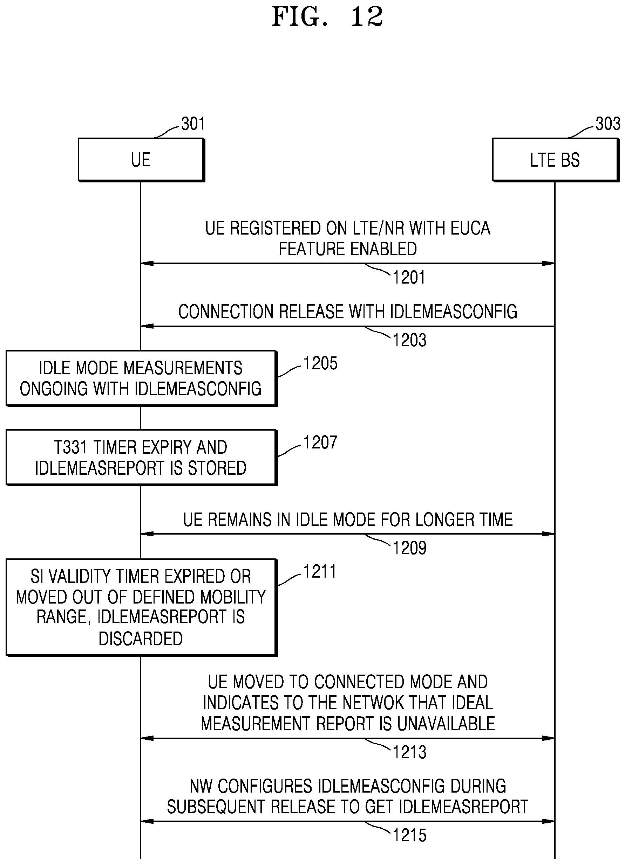

According to the related art, initially a UE is registered in LTE/NR cell with euCA feature enabled from SIB2. The idle measurement configuration is received with a list of carrier frequencies in SIBS, but it is not present in the connection release. Measurements are done and measurement reports are stored in UE. But UE can move out of the validity area by reselection and still hold the old measurement reports in idle mode. Also, UE remains in idle mode for a duration which exceeds a system information (SI) validity timer (e.g., 24 hours). As an example, the SI validity timer is defined in 3GPP specification 36.331 5.2.1.3. This will lead to UE reporting old/invalid idle measurement reports to the network for frequencies received from system information that is currently invalid after the expiry of the SI validity timer. So, the network might add invalid secondary cells which will lead to data throughput degradation. FIG. 11 illustrates a sequence flow for sending the measurement report even after the expiry of the SI validity timer. Now operations 1101, 1103, 1105, 1107 and 1109 correspond to the operations 801, 803, 805, 807 and 809, and for the sake of brevity, a repeated description is omitted. According to the related art, after determining that the UE remains in idle for a longer period, at operation 1111 the SI validity timer will monitor for its expiry. The timer expiry time for the SI validity timer was defined as 24 hours. Thereafter, when the UE moves to connected mode and the network requests for an idle measurement report at operation 1113, the UE 301 at operation 1115 sends the idle measurement report with older measurements. Due to this the network might add invalid secondary cells which will lead to data throughput degradation. To overcome the aforesaid issue following method as shown in FIG. 12 has been implemented.

FIG. 12 illustrates a sequence of operations for discarding the idle measurement reports after the SI validity timer expiry, according to an example embodiment. According to an example embodiment, when the UE moves out of the validity area by reselection (i.e., from one serving cell to another serving cell), then UE can delete/discard the available idle measurement reports. Also, if the UE remains in idle mode for longer duration that exceeds the SI validity timer (24 hours) with idle mode measurement reports measured using the frequencies received in system information, then UE can delete/discard the available idle measurement reports. This helps in reliable measurement reporting to network and no degradation in data and throughput. According to an example embodiment, operations 1201, 1203, 1205, 1207 and 1209 correspond to operations 1101, 1103, 1105, 1107 and 1109, and for the sake of brevity, a repeated description is omitted. Now after determining, by the UE at operation 1209, whether the UE remains in the idle mode for the predefined threshold time period, the UE 301 at operation 1211 determines whether the UE 301 remains in the idle mode for the longer period of time that exceeds a system information validity time period (i.e., expiration of a System Information Block (SIB) timer (or the SI validity timer)) or when the UE moved out of defined mobility range. Then, the UE 301 discards the stored idle measurement report if any one of the conditions (i.e., the expiry of the SIB timer (or the SI validity timer) or the UE moved out of defined mobility range) occurred. As an example, the SIB timer is defined in specification reference: 36.331 5.2.1.3. Then, when the UE 301 at operation 1213 moves to a connected mode, the UE 301 indicates an unavailability of the idle measurement report. Thereby at operation 1215 the network configures the idle measurement configuration during subsequent connection release to obtain the latest idle measurement report from the UE 301. This helps in reliable measurement reporting to network and no degradation in data throughput.

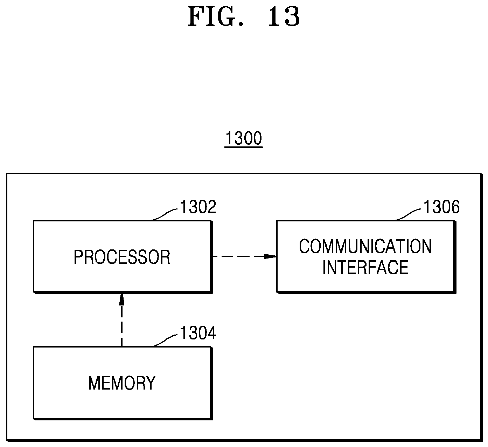

FIG. 13 illustrates a diagram of a network device, according to an example embodiment. The network device 1300 may correspond to 3GPP Public Land Mobile Network (PLMN)-A and/or N3GPP PLMN-A, as discussed throughout this disclosure. The network device 1300 may include at least one processor 1302, at least one memory 1304 (e.g., storage), and a communication interface 1306 (e.g., communicator or communication interface). Further, the network device 1300 may also include the Cloud -RAN (C-RAN), a Central Unit (CU), a core Network (NW), a Distributed unit (DU) or the any other possible network (NW) entity. The communication interface 1306 may perform one or more functions for transmitting and receiving signals via a wireless channel.

As an example, the processor 1302 may be a single processing unit or a number of processing units, all of which could include multiple computing units. The processor 1302 may be implemented as one or more microprocessors, microcomputers, microcontrollers, digital signal processors, central processing units, state machines, logic circuitries, and/or any devices that manipulate signals based on operational instructions. Among other capabilities, the processor 1302 is configured to fetch and execute computer-readable instructions and data stored in the memory. The processor 1302 may include one or a plurality of processors. At this time, one or a plurality of processors 1302 may be a general-purpose processor, such as a central processing unit (CPU), an application processor (AP), or the like, a graphics-only processing unit such as a graphics processing unit (GPU), a visual processing unit (VPU), and/or an AI-dedicated processor such as a neural processing unit (NPU). The one or a plurality of processors 1302 may control the processing of the input data in accordance with a predefined operating rule or artificial intelligence (AI) model stored in the non-volatile memory and the volatile memory, i.e., memory 1304. The predefined operating rule or artificial intelligence model is provided through training or learning.

The memory 1304 may include any non-transitory computer-readable medium known in the art including, for example, volatile memory, such as static random access memory (SRAM) and dynamic random access memory (DRAM), and/or non-volatile memory, such as read-only memory (ROM), erasable programmable ROM, flash memories, hard disks, optical disks, and magnetic tapes.

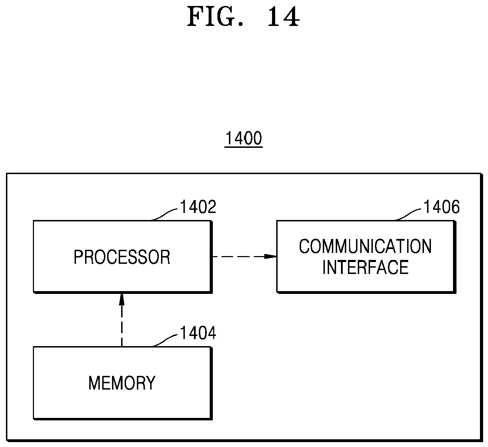

FIG. 14 is a diagram illustrating the configuration of a user equipment (UE) in a wireless communication system, according to an example embodiment. The configuration of FIG. 14 may be understood as a part of the configuration of the UE 1400. Further, the method as disclosed above may be implemented in the UE 1400 according to a further example embodiment. Hereinafter, it is understood that terms including "unit" or "module" at the end may refer to the unit for processing at least one function or operation and may be implemented in hardware, software, or a combination of hardware and software.

Referring to FIG. 14, the UE 1400 may include at least one processor 1402, a memory (e.g., storage) 1404, and a communication interface 1406. By way of example, the UE 1400 may be a User Equipment, such as a cellular phone or other device that communicates over a plurality of cellular networks (such as a 3G, 4G, a 5G or pre-5G, 6G network or any future wireless communication network). The communication interface 1406 may perform functions for transmitting and receiving signals via a wireless channel.

As an example, the processor 1402 may be a single processing unit or a number of processing units, all of which could include multiple computing units. The processor 1402 may be implemented as one or more microprocessors, microcomputers, microcontrollers, digital signal processors, central processing units, state machines, logic circuitries, and/or any devices that manipulate signals based on operational instructions. Among other capabilities, the processor 1402 is configured to fetch and execute computer-readable instructions and data stored in the memory. The processor 1402 may include one or a plurality of processors. At this time, one or a plurality of processors 602 may be a general-purpose processor, such as a central processing unit (CPU), an application processor (AP), or the like, a graphics-only processing unit such as a graphics processing unit (GPU), a visual processing unit (VPU), and/or an AI-dedicated processor such as a neural processing unit (NPU). The one or a plurality of processors 1402 may control the processing of the input data in accordance with a predefined operating rule or artificial intelligence (AI) model stored in the non-volatile memory and the volatile memory, i.e., memory 1404. The predefined operating rule or artificial intelligence model is provided through training or learning.

The memory 1404 may include any non-transitory computer-readable medium known in the art including, for example, volatile memory, such as static random access memory (SRAM) and dynamic random access memory (DRAM), and/or non-volatile memory, such as read-only memory (ROM), erasable programmable ROM, flash memories, hard disks, optical disks, and magnetic tapes.

Some example embodiments disclosed herein may be implemented using processing circuitry. For example, some example embodiments disclosed herein may be implemented using at least one software program running on at least one hardware device and performing network management functions to control the elements.

While specific language has been used herein, any limitations arising on account of the same are not intended. As would be apparent to a person in the art, various working modifications may be made to the method in order to implement the inventive concept as taught herein.

The drawings and the forgoing description give examples of embodiments. Those skilled in the art will appreciate that one or more of the described elements may well be combined into a single functional element. Alternatively, certain elements may be split into multiple functional elements. Elements from one embodiment may be added to another embodiment. For example, orders of processes described herein may be changed and are not limited to the manner described herein.

Moreover, the actions of any flow diagram need not be implemented in the order shown; nor do all of the acts necessarily need to be performed. Also, those acts that are not dependent on other acts may be performed in parallel with the other acts. The scope of embodiments is not limited by these specific examples. Numerous variations, whether explicitly given in the specification or not, such as differences in structure, dimension, and use of material, are possible.

While aspects of example embodiments have been particularly shown and described, it will be understood that various changes in form and details may be made therein without departing from the scope of the following claims.

## Claims

1. A method for reporting idle measurement reports for secondary cell addition in a Multi Subscriber Identity Module, SIM, Multi Standby, MUSIM, mode, the method comprising:
receiving, by a MUSIM user equipment, UE, during a connection release from a network, an idle measurement configuration indicating a first set of frequencies compatible with a first serving frequency of a Long-Term Evolution, LTE, stack, wherein a primary stack of a first SIM of the MUSIM UE is registered with the network with the first serving frequency, and a secondary stack of a second SIM of the MUSIM UE is registered with the network with a second serving frequency among the first set of frequencies;
performing, by the UE, an idle measurement with each frequency of the first set of frequencies;
receiving, by the UE, a request to provide an idle measurement report from the network when the primary stack moves to a connected mode;
performing, by the primary stack, a filtering operation on the first set of frequencies with the first serving frequency and with the second serving frequency based on carrier aggregation, CA, compatibility; and
sending, by the UE, the idle measurement report indicating frequencies among the first set of frequencies that are compatible with both the first serving frequency and the second serving frequency based on the filtering operation.

2. The method as claimed in claim 1, further comprising:
monitoring, by the UE, a timer associated with the UE, wherein during a running of the timer the idle measurement is continued to be performed; and
storing, by the UE, the idle measurement report based on the idle measurement performed with the first set of frequencies.

3. The method as claimed in claim 2, further comprising:
determining, by the UE, whether the UE remains in an idle mode for a threshold time period based on the monitoring of the timer;
obtaining, from the secondary stack, by the primary stack, updated idle measurement values for the first set of frequencies based on the request from the network; and
sending, by the UE, an updated idle measurement report based on the updated idle measurement values.

4. The method as claimed in claim 3, further comprising discarding, by the UE, stored idle measurements based on determining the UE has been in the idle mode for the threshold time period or the UE has moved out of a defined mobility range.

5. The method as claimed in claim 4, further comprising indicating, by the UE to the network, an unavailability of the idle measurement report based on the UE moving to the connected mode,
wherein the network configures the idle measurement configuration during a subsequent connection release to obtain the updated idle measurement report from the UE.

6. A user equipment, UE, for reporting idle measurement reports for secondary cell addition in a Multi Subscriber Identify Module, SIM, Multi Standby, MUSIM, mode, the UE comprising:
one or more memories storing instructions; and
one or more processors configured to execute the instructions to:
receive, during a connection release from a network, an idle measurement configuration indicating a first set of frequencies compatible with a first serving frequency of a Long-Term Evolution, LTE, stack, wherein a primary stack of a first SIM of the UE is registered with the network with the first serving frequency and a secondary stack of a second SIM of the UE is registered with the network with a second serving frequency among the first set of frequencies;
perform an idle measurement with each frequency of the first set of frequencies;
receive a request to provide an idle measurement report from the network when the primary stack moves to a connected mode;
perform, by the primary stack, a filtering operation on the first set of frequencies with the first serving frequency and with the second serving frequency based on carrier aggregation, CA, compatibility; and
send the idle measurement report indicating frequencies among the first set of frequencies that are compatible with both the first serving frequency and the second serving frequency based on the filtering operation.

7. The UE as claimed in claim 6, wherein the one or more processors are further configured to execute the instructions to:
monitor a timer associated with the UE; and
store the idle measurement report based on the idle measurement performed with the first set of frequencies.

8. The UE as claimed in claim 7, wherein the one or more processors are further configured to execute the instructions to perform the idle measurement while the timer is running.

9. The UE as claimed in claim 7 or claim 8, wherein the one or more processors are further configured to execute the instructions to:
determine whether the UE remains in an idle mode for a threshold time period based on the timer;
obtain, from the secondary stack, by the primary stack, an updated idle measurement values for the first set of frequencies based on the request from the network; and
send an updated idle measurement report based on the updated idle measurement values.

10. The UE as claimed in claim 9, wherein the one or more processors are further configured to execute the instructions to discard stored idle measurements based on determining the UE has been in the idle mode for the threshold time period.

11. The UE as claimed in claim 9 or claim 10, wherein the one or more processors are further configured to execute the instructions to discard stored idle measurements based on the UE moving out of a defined mobility range.

12. The UE as claimed in any of claims 9-11, wherein the one or more processors are further configured to execute the instructions to indicate to the network, an unavailability of the idle measurement report based on the UE moving to the connected mode, and
wherein the network configures the idle measurement configuration during a subsequent connection release to obtain the updated idle measurement report from the UE.

13. The UE as claimed in any of claims 9-12, wherein the threshold time period is 24 hours.

14. The UE as claimed in any of claims 9-13, wherein the timer is a T331 timer.
